# EUROPÄISCHE PATENTSCHRIFT

(11) **EP 0 792 183 B1**
(45) Veröffentlichungstag und Bekanntmachung des Hinweises auf die Patenterteilung: **26.03.2003**
(21) Anmeldenummer: 96919561.9
(22) Anmeldetag: 22.05.1996
(51) Int. Cl.: B01D 53/04

(54) **VERFAHREN ZUR REINIGUNG VON MIT INSBESONDERE CHEMISCHEN RÜCKSTÄNDEN BEFRACHTETEN GASEN**
METHOD OF CLEANING GASES, IN PARTICULAR GASES CONTAMINATED WITH CHEMICAL RESIDUES
PROCEDE D'EPURATION DE GAZ CONTAMINES PRINCIPALEMENT PAR DES RESIDUS CHIMIQUES

(30) Priorität: 14.09.1995 DE 19534008
(43) Veröffentlichungstag der Anmeldung: 03.09.1997
(73) Patentinhaber: maul & co.- Chr. Belser GmbH, 90471 Nürnberg (DE)
(72) Erfinder: HÄRLE, Rainer, D-71701 Schwieberdingen (DE); MARQUARDT, Winfried, D-90453 Nürnberg (DE)
(74) Vertreter: Stippl, Hubert, Dipl.-Ing.
(86) Internationale Anmeldenummer: DE9600889
(87) Internationale Veröffentlichungsnummer: WO97010041

(56) Entgegenhaltungen:
- EP-A- 0 305 919
- EP-A- 0 654 295
- DE-A- 2 352 075
- DE-A- 2 928 138
- US-A- 4 529 415

## Beschreibung

Die Erfindung betrifft zunächst ein Verfahren zur Reinigung von mit insbesondere chemischen Rückständen befrachteten Gasen, insbesondere ein Verfahren zur Reinigung von Abluft aus Druckereianlagen. Weiterhin betrifft die Erfindung auch eine Vorrichtung zur Durchführung eines solchen Verfahrens.

Bei einem bekannten Verfahren der in Frage stehenden Art (EP 0 654 295) wird zunächst das zu reinigende Gas aus den die Verunreinigungen hervorrufenden Bereichen abgezogen. Solche Bereiche können beispielsweise die Kapseln von Druckereimaschinen sein, es liegen aber auch andere Gas oder Luft verunreinigende Elemente im Bereich der Erfindung. Das zu reinigende Gas wird nach dem Stand der Technik über Rohrleitungen einer Anordnung von mehreren Adsorber-Filterpatronen zugeführt, in welchen die Verunreinigungen von Gas getrennt werden können. Die Adsorber-Filterpatronen sind mit einem zur Gasreinigung geeigneten adsorbierenden Mittel gefüllt, beispielsweise mit Aktivkohle. Um die Adsorber-Filterpatronen zyklisch wiederkehrend zu regenerieren, werden sie vom Abluftstrom getrennt. Danach wird ein Austreibmittel eingeleitet, das zum Reinigen oder Regenerieren des in den Adsorber-Filterpatronen verwendeten Adsorbermaterials geeignet ist, beispielsweise Wasserdampf. Der zyklisch wiederkehrende Regenerationsvorgang läuft in der Regel derartig ab, daß neben mindestens einer Anzahl von für die kontinuierliche Durchführung des Reinigungsprozesses des Gases vorgesehenen und damit im Adsorberbetrieb laufenden Adsorber-Filterpatronen mindestens eine weitere Adsorber-Filterpatrone vorgesehen ist, die gerade regeneriert wird. Der Regenerationsvorgang wechselt zyklisch die Mehrzahl der Adsorber-Filterpatronen durch.

Beim Stand der Technik hat es sich nun gezeigt, daß nach Abschluß eines Regenerationsprozesses die regenerierte Adsorber-Filterpatrone nicht sofort und ohne weiteres in den Adsorbermodus überführt werden kann. In der Regel sind frisch regenerierte Adsorber-Filterpatronen in hohem Maße mit dem Austreibmittel beladen und haben eine relativ hohe Temperatur. Dies bedeutet, daß beispielsweise bei Verwendung von Wasserdampf als Austreibmittel bei schlagartiger Zuführung großer kalter Gasmengen eine extrem hohe Befeuchtung des Gases im Auslaßbereich der Adsorber-Filterpatrone auftritt. Würde solches Gas oder solche Luft beispielsweise der Kapsel einer Druckmaschinen zugeführt, wäre ein ordnungsgemäßer Betrieb der Druckmaschinen unmöglich.

Aus diesen Gründen ist man dazu übergegangen, frisch regenerierte Adsorber-Filterpatronen zunächst abzukühlen und dafür zu sorgen, daß das im Adsorbermaterial enthaltene Wasser aus der Filterpatrone entfernt wird. Dabei wurde Wasserdampf, beladen mit Resten der abgefilterten Chemikalien, in die Atmosphäre geblasen. Weiterhin hat man aufgrund der geschilderten Problematik (Zuführung von Feuchtigkeit aus den Adsorber-Filterpatronen in die Druckmaschinenkapseln) bei dem Einsatz von solchen Adsorber-Filterpatronen im Bereich der Druckmaschinen-Abluftreinigung davon abgesehen, die Abluft in einem Umluftbetrieb zu fahren. Dies bedeutet, daß dem Luftstrom größere Mengen an Frischluft zugeführt werden müssen, die - je nach Außentemperatur - mehr oder weniger anzuwärmen ist. Dies ist mit einem nicht unerheblichen Energiemehreinsatz bei Betrieb von Druckmaschinen verbunden.

Der Erfindung liegt die Aufgabe zugrunde, ein Verfahren mit den Merkmalen des Oberbegriffs des Anspruchs 1 derart weiterzubilden, daß bei reduzierter Umweltbelastung eine Führung des gereinigten Gases im Umluftbetrieb ermöglicht wird. Diese Aufgabe wird durch die kennzeichnenden Merkmale des Anspruches 1 gelöst, vorteilhafte Weiterbildungen des Verfahrens ergeben sich aus den Unteransprüchen 2 - 10. Die Ansprüche 12 - 15 betreffen eine vorteilhafte Vorrichtung, mit der das erfindungsgemäße Verfahren durchgeführt werden kann.

Als Kern der Erfindung wird es zunächst angesehen, mindestens eine weitere zeitweise in einem partiellen Adsorberzustand betriebene Adsorber-Filterpatrone vorzusehen, die nach Abschluß ihres Regenerationszyklus mit ansteigender Gasdurchsatzmenge der mindestens einen weiteren, im Adsorberbetrieb laufenden Adsorber-Filterpatrone zugeschaltet wird. Mit anderen Worten wird jede Adsorber-Filterpatrone, deren Regenerationszyklusabschnitt gerade abgeschlossen ist, nicht einem gesonderten Kühlvorgang unterzogen, sie wird vielmehr gleich in den Gaskreislauf der Anlage einbezogen, wobei aber der Gasdurchsatz sehr langsam von im wesentlichen Null beginnend auf den maximal vorgesehenen Gasdurchsatzwert hochgeregelt wird. Damit wird der Gasdurchsatz so lange niedrig gehalten wird, als in der Adsorber-Filterpatrone eine hohe Durchfeuchtung des Adsorbermaterials und eine hohe Temperatur herrscht. Ist die Temperatur in der Adsorber-Filterpatrone abgesunken und hat die Feuchtigkeit nachgelassen, wird der Gasdurchsatz durch die frisch regenerierte Adsorber-Filterpatrone erhöht. Die regenerierte Adsorber-Filterpatrone wird mithin nicht mehr in einem gesonderten Zeitabschnitt gekühlt, vielmehr wird sie einem partiellen Kühladsorbermodus unterzogen, in dem sie bereits teilweise ihre Adsorberfunktion wieder übernehmen kann.

Durch diese Maßnahme wird es möglich, die Gesamtheit der vorhandenen Adsorber-Filterpatronen in einem Umluftkreislauf einzusetzen. In Praxis können beispielsweise fünf Adsorber-Filterpatronen vorhanden sein, davon befindet sich jeweils eine in einem Regenerationszyklus und über denselben Zeitraum eine in dem partiellen Kühlmodus. Sobald der Regenerationszyklus abgeschlossen ist, wird der frisch regenerierte Adsorber-Filterpatrone in den partiellen Kühlmodus übergeführt, eine andere Adsorber-Filterpatrone wird in den Regenerationszyklus geschaltet, drei weitere Adsorber-Filterpatronen befinden sich im Adsorberbetriebszustand, in dem sie volle Adsorberleistung hergeben.

Trotz der Tatsache, daß während des partiellen Kühlmodus die frisch regenerierte Adsorber-Filterpatrone sehr viel Feuchtigkeit enthält, ist aufgrund der geringen Gasdurchsatzmengen nicht zu befürchten, daß an die Anlage angeschlossene Druckanlagen mit zu viel Feuchtigkeit beaufschlagt werden. Vielmehr kann bei entsprechender Regelung der Gasdurchsatzmengen im partiellen Kühlmodus erreicht werden, daß die Gas- oder Abluftfeuchtigkeit sich im Bereich der Druckmaschinenkapseln gerade in den optimalen Bereichen bewegt.
Es hat sich bei Tests als vorteilhaft erwiesen, wenn die Erhöhung des Gasdurchsatzes der zeitweise im parziellen Adsorbermodus laufenden Adsorber-Filterpatrone kontinuierlich ansteigend verläuft. Dies kann durch relativ einfache Regelmechanismen erreicht werden.

Es kann auch vorteilhaft sein, wenn die Erhöhung der Gasdurchsatzmenge der zeitweise im partiellen Adsorberzustand oder Kühlzustand laufenden Adsorber-Filterpatrone nach einer e-Funktion erfolgt. Dies steht im Übereinklang mit den physikalischen Prozessen, die während des partiellen Adsorbermodus innerhalb der Adsorber-Filterpatronen ablaufen. Es ist aber auch möglich, die Erhöhung der Gasdurchsatzmenge der zeitweise im partiellen Adsorberzustand laufenden Adsorber-Filterpatrone abhängig von der Temperatur des Gases am Ausgang oder vom Feuchtegehalt des Gases am Ausgang der Patrone zu regeln. Weitere Regelmechanismen können ebenfalls eingesetzt werden, beispielsweise kann es auch vorteilhaft sein, die Gasdurchsatzmenge abhängig von der Schadstoffbelastung des Gases am Ausgang der Patrone zu steuern, so daß die Gasdurchsatzmenge nicht notwendigerweise erhöht wird, sondern je nach Schadstoffanfall am Ausgang der Patrone erhöht oder erniedrigt wird.

Besonders vorteilhaft läßt sich das Verfahren zur Reinigung von lösungsmittelbelasteter Abluft von großen Druckereianlagen einsetzen. Große Druckereianlagen verwenden Adsorber-Filterpatronenanlagen mit Aktivkohlefiltermaterial zur Reinigung der Abluft. Es hat sich herausgestellt, daß bei Einsatz des erfindungsgemäßen Verfahrens in Verbindung mit einem Umluftbetrieb der Abluft die Schadstoff-Spitzenbelastungen, die in die Außenluft gehen, um 99% reduziert werden können. Dies ist aus umwelttechnischer Sicht ein extrem guter Wert.

Bei der Durchführung des Verfahrens hat es sich ferner als vorteilhaft erwiesen, die Zeitdauer des zeitweisen partiellen Adsorberzustandzyklusabschnittes der Zeitdauer des Regenerationsprozeßzyklusabschnittes entsprechen zu lassen, so daß die Beaufschlagung einer Adsorber-Filterpatrone zur Durchführung des Regenerationsprozesses einer Filterpatrone der Zeitdauer des partiellen Kühlmodus entspricht. Die gesamte Anlage kann in äquidistanten Zeitabschnitten durchregeneriert werden und die frisch regenerierten Adsorber-Filterpatronen in entsprechend langen Zeitabschnitten parziell im Kühlmodus gefahren werden.

Eine Vorrichtung zur Durchführung des Verfahrens nach Anspruch 1 sieht nun mindestens ein eine Verunreinigung eines Gases verursachendes Element vor. Dies kann eine Druckereianlage sein, wobei das verunreinigte Gas dann die Abluft der Druckereianlage ist. Die Abluft wird über ein Leitungssystem einer Mehrzahl von Adsorber-Filterpatronen zugeführt, um eine Gasströmung in den Leitungen aufrechtzuerhalten, sind Gebläse vorgesehen. Den Adsorber-Filterpatronen sind Regenerationseinrichtungen, beispielsweise Wasserdampfleitungen zum Einführen des Austreibmittels "heißer Wasserdampf" in die Filterpatronen vorgesehen, um die Filterpatronen in einem Regenerationszyklusabschnitt betreiben zu können. Erfindungsgemäß ist nun zusätzlich zu den im Adsorberbetrieb laufenden Adsorber-Filterpatronen und der mindestens einen jeweils im Regenerationsprozeß laufenden Adsorber-Filterpatronen mindestens eine weitere Filterpatrone an das Leitungssystem angeschlossen, die über Steuermittel, nämlich Drosselklappen und Steuerelektronik kontinuierlich und angepaßt den im Adsorberbetrieb laufenden Adsorber-Filterpatronen zuschaltbar ist. Wenn von kontinuierlicher Zuschaltung gesprochen wird, so ist damit bezeichnet, daß die Zuschaltung derart erfolgt, daß der Gasdurchsatz durch die weitere Adsorber-Filterpatrone langsam gesteigert wird, um Austreibmittelrückstände in der Adsorber-Filterpatrone nur in einem für die angeschlossene Anlage verträglichen Maß in den Umluftstrom gelangen zu lassen.

Bei einer im Test laufenden Anlagen haben sich fünf Adsorber-Filterpatronen als vorteilhaft erwiesen, wobei drei Adsorber-Filterpatronen im Adsorberbetrieb, eine im Regenerationsbetrieb und eine im partiellen Adsorberbetrieb arbeitet. Ein derartiges Betriebsverhältnis hat sich als besonders vorteilhaft deswegen herausgestellt, weil für den Regenerationsprozeß einer Adsorber-Filterpatrone bei normaler Betriebsauslastung etwa 20 - 25% der zur Verfügung stehenden Adsorberbetriebsarbeitszeit benötigt werden.

Werden an der Ausgangsseite einer jeden Adsorber-Filterpatrone Meßelemente zur Bestimmung der Gasfeuchte, der Gastemperatur oder des Schadstoffanteils im Gas angeordnet, kann die Anlage einerseits optimal auf ihre Betriebszustände überwacht werden, zum anderen kann der Ausgang der Meßelemente aber auch einem Steuereingang der Ventilsteuerung der Anlage zugeführt werden, damit beispielsweise die Steigerung des Gasdurchsatzes durch die im partiellen Adsorber- oder Kühlmodus laufende Adsorber-Filterpatrone abhängig von den jeweiligen Meßwerten gesteuert werden kann.

Die Erfindung ist anhand von Ausführungsbeispielen in der Zeichnungsfigur näher erläutert. Diese zeigen:

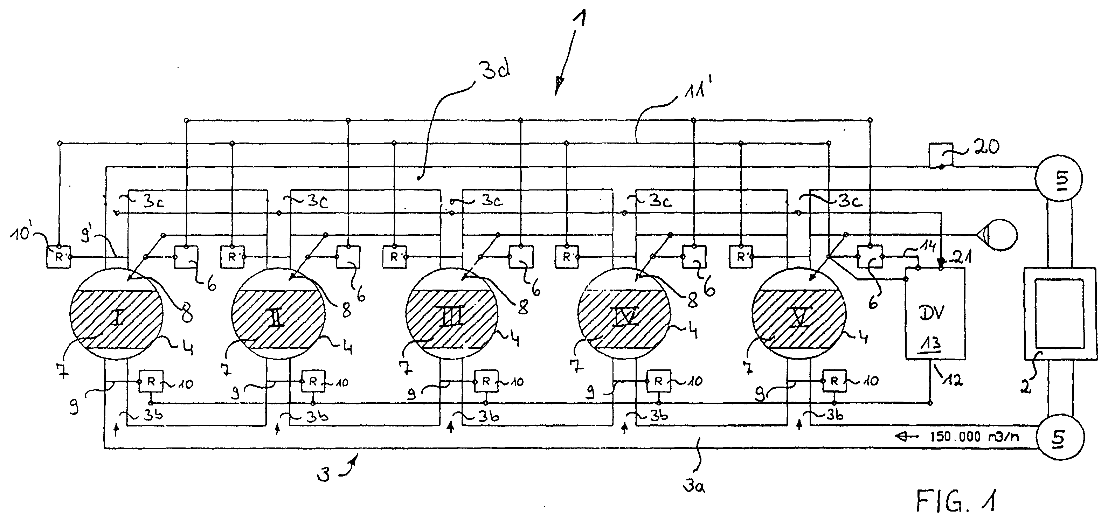

- Fig. 1: eine schematische Darstellung einer Adsorber-Filteranlage mit fünf Adsorber-Filterpatronen.

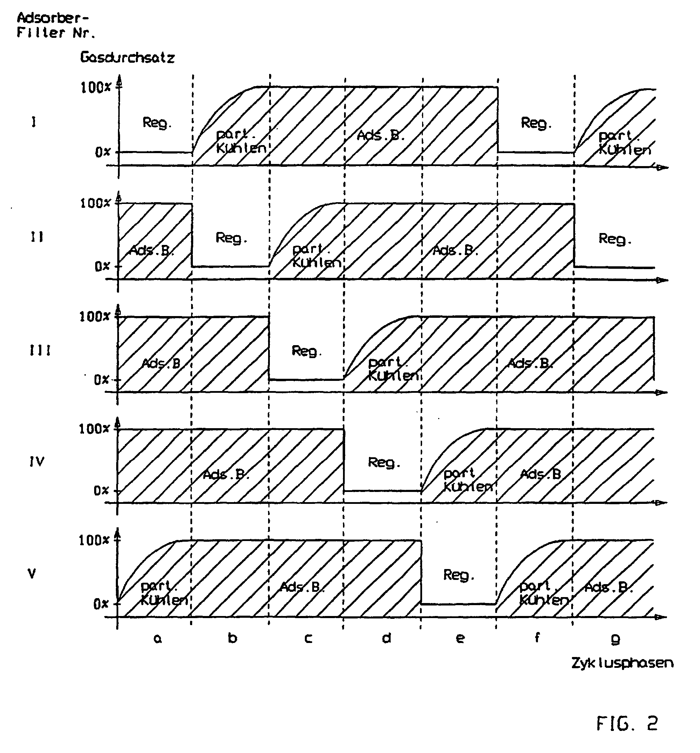

- Fig. 2: eine grafische Darstellung der Zyklusphasen "Regeneration" regenerierend, "partielles Kühlen" und "Adsorberbetrieb" bei fünf Adsorber-Filterpatronen;

Zunächst wird auf Zeichnungsfig. 1 Bezug genommen. Die Anlage 1 umfaßt zunächst mindestens ein eine Verursachung eines Gases, verursachendes Element 2 auf, das beispielsweise eine Druckereianlage mit einer Mehrzahl von Druckmaschinenkapseln sein kann. Über ein Leitungssystem 3 wird Abluft vom Element 2 zu einer Mehrzahl von Adsorber-Filterpatronen 4 geführt und von dort im Kreislauf wieder zu dem die Verunreinigung des Gases verursachenden Element 2 zurückgeführt. Um einen geschlossenen Umluftkreislauf zu gewährleisten, besteht das Leitungssystem 3 aus einer Zulufthauptleitung 3a, Zuluftstichleitungen 3b, Abluftstichleitungen 3c und einer Abluftsammelleitung 3d, die die über die Abluftstichleitungen 3c aus den Adsorber-Filterpatronen 4 austretenden Gasströme sammelt und an das Element 2 zurückführt. Über Gebläse 5 wird ein Gasstrom in dem System der Leitungen 3 - 3d aufgebaut.

An den Adsorber-Filterpatronen 4 sind Regenerationseinrichtungen 6 vorgesehen, über die das in den Adsorber-Filterpatronen enthaltene Adsorbermaterial 7, beispielsweise Aktivkohle, mit einem Austreibmittel 8, angedeutet durch einen Pfeil, beaufschlagt werden kann.

In den Zuluftstichleitungen 3b sind Drosselklappen 9 vorgesehen, die über Stellglieder 10 betätigt werden können. Die Ansteuerung der Stellglieder 10 erfolgt über Steuerleitungen 11 durch den Ausgang 12 einer Prozeßsteueranlage 13. Bezugsziffer 21 bezeichnet den Steuereingang der Prozeßsteueranlage 13. Auch in den Abluftsammelleitungen 3d sind Drosselklappen 9' angedeutet, die über Stellglieder 10' und eine Steuerleitung 11' mit der Prozeßsteueranlage 13 verbunden sind.

Nachfolgend wird auf Zeichnungsfig. 2 Bezug genommen, um zu erklären, wie die Betriebszustände der mit I - V durchnumerierten Adsorber-Filterpatronen 4 abläuft. In der Zyklusphase a befindet sich die Adsorber-Filterpatrone I in einem Regenerationszyklus, d. h. die Regenerationseinrichtung 6 I wird über eine Steuerleitung 11 von der Prozeßsteueranlage 13 so geschaltet, daß dem Adsorbermaterial 7 in der Adsorber-Filterpatrone I Wasserdampf zugeführt wird. Diese Phase wird als Regenerationsphase bezeichnet. Die Drosselklappen 9, 9' der Adsorber-Filterpatrone I sind dabei geschlossen.

Die Adsorber-Filterpatrone II, III und IV befinden sich im Adsorberbetrieb, d. h. die Drosselklappen 9 und 9' der entsprechenden Adsorber-Filterpatrone II - IV sind vollständig geöffnet, das Gas durchströmt die Adsorber-Filterpatronen II - IV mit einer Durchrate von etwa 50.000 m³/h je Adsorber-Filterpatrone.

Während der Zyklusphase a befindet sich die Adsorber-Filterpatrone V in einem sogenannten partiellen Kühlzustand oder partiellen Adsorberzustand, d. h. die Drosselklappen 9, 9' sind zu Beginn der Zyklusphase a noch geschlossen und werden über die zugeordneten Stellglieder langsam geöffnet, so daß sich der Gasdurchsatz durch die Adsorber-Filterpatrone V von Null an langsam bis zu einem Maximalwert steigert. Dadurch verteilt sich der über die Gebläse 5 zugeführte Gesamtgasstrom von beispielsweise 150.000m³/h auf vier Filterpatronen, bis der Zyklusabschnitt b beginnt.

Im Zyklusabschnitt b wird nun die frisch regenerierte Adsorber-Filterpatrone I in den partiellen Kühlzustand geschaltet, d.h. die Drosselklappen 9 werden im Verlauf des Zyklusabschnittes b langsam bis zu einem Maximalwert geöffnet. Die Adsorber-Filterpatrone II wird hingegen über die ihr zugeordneten Drosselklappen 9 vom Gasstrom getrennt und über die Regenerationseinrichtung 6 durch ein Austreibmittel 8 beaufschlagt. Die Adsorber-Filterpatronen III - V hingegen befinden sich bei vollgeöffneten Dosselklappen 9 im Adsorber-Betriebzustand.

Wie aus der Abfolge der Zyklusphasen der Zeichnungsfig. 2 deutlich ersichtlich, wird nun die Regenerationsphase bei jedem Zyklusphasenwechsel zur nächsten Adsorber-Filterpatrone weitergeschaltet, ebenso die partiellen Kühlphasen und die Adsorber-Betriebsphasen.

Durch die langsame Zuschaltung der frisch regenerierten Adsorber-Filterpatronen im nachfolgenden partiellen Kühlzustand kann die gesamte Anlage im Umluftbetrieb gefahren werden. Ein Abluftkamin, der in Zeichnungsfig. 1 mit Bezugsziffer 20 bezeichnet ist, kann in der Regel geschlossen bleiben, so daß keinerlei Gase an die Umwelt gelangen.

Abschließend sei bemerkt, daß die Erfindung auch mit einer anderen Anzahl von Adsorber-Filterpatronen verwirklicht werden kann, daß auch jeweils eine Mehrzahl von Adsorber-Filterpatronen gleichzeitig oder während sich überschneidenden Abschnitten regeneriert und partiell gekühlt werden kann. Ferner ist möglich, eine Überzahl von Adsorber-

Filterpatronen bezogen auf die zu reinigenden Gasmengen vorzusehen, um beispielsweise bei Ausfall von Adsorber-Filterpatronen oder zu Wartungszwecken die Anlage kontinuierlich weiterlaufen lassen zu können.

## Patentansprüche

1. Verfahren zur Reinigung von mit insbesondere chemischen Rückständen befrachteten Gasen, insbesondere zur Reinigung von Abluft aus Druckereianlagen,
- bei welchem das zu reinigende Gas aus den die Verunreinigung hervorrufenden Bereichen abgezogen wird und
- über Rohrleitungen einer Anordnung von Adsorber- Filterpatronen zugeführt wird, die
- zur Trennung der Verunreinigungen vom Gas dienen,
- zyklisch wiederkehrend zur Durchführung eines Regenerationsvorganges vom Abluftstrom getrennt werden und
- deren Adsorbermaterial mit einem Austreibmittel beaufschlagt wird, das zum Reinigen oder Regenerieren des Adsorbermaterials geeignet ist.
- wobei für die kontinuierliche Durchführung des Reinigungsprozesses neben mindestens einer im Adsorberbetrieb laufenden Adsorber-Filterpatrone sich mindestens eine Adsorber-Filterpatrone im zyklischen Wechsel mit jeweils einer der anderen Adsorber-Filterpatronen im Regenerationszustand befindet,
**dadurch gekennzeichnet, daß**
die Adsorber-Filterpatronen zwischen dem Regenerations- und Adsorptionszyklus in einem zeitweise partiellen Adsorberzustand betrieben werden, bei dem sie jeweils nach Abschluß ihres Regenerationszyklus mit geregelt ansteigender Gasdurchsatzmenge den im Adsorberbetrieb laufenden Adsorber-Filterpatronen zugeschaltet werden.

2. Verfahren nach Anspruch 1,
**dadurch gekennzeichnet, daß**
die Erhöhung der Gasdurchsatzmenge der zeitweise im partiellen Adsorberzustand laufenden Adsorber-Filterpatrone kontinuierlich ansteigend verläuft.

3. Verfahren nach Anspruch 1,
**dadurch gekennzeichnet, daß**
die Erhöhung der Gasdurchsatzmenge der zeitweise im partiellen Adsorberzustand laufenden Adsorber-Filterpatrone nach einer e-Funktion erfolgt.

4. Verfahren nach Anspruch 1,
**dadurch gekennzeichnet, daß**
die Erhöhung der Gasdurchsatzmenge der zeitweise im partiellen Adsorberzustand laufenden Adsorber-Filterpatrone abhängig von der Temperatur des Gases am Ausgang der Patrone gesteuert wird.

5. Verfahren nach einem der vorhergehenden Ansprüche,
**gekennzeichnet durch**
seine Verwendung zur Reinigung lösungsmittelbelasteter Abluft von Druckereianlagen.

6. Verfahren nach einem der vorhergehenden Ansprüche,
**dadurch gekennzeichnet, daß**
als Austreibmittel beim Regenerationsprozeß Wasserdampf verwendet wird.

7. Verfahren nach Anspruch 6,
**dadurch gekennzeichnet, daß**
die Erhöhung der Gasdurchsatzmenge durch die im partiellen Adsorberzustand laufende Adsorber-Filterpatrone abhängig vom Feuchtgehalt des Gases am Ausgang der Patrone geregelt wird.

8. Verfahren nach einem der vorhergehenden Ansprüche,
**gekennzeichnet durch**
die Verwendung von Aktivkohle als Adsorbermaterial.

9. Verfahren nach einem der vorhergehenden Ansprüche,
**dadurch gekennzeichnet, daß**
die aus der Adsorber-Filterpatronenanordnung abströmende Luft im Umluftverfahren zu den die Verunreinigung hervorrufenden Bereichen zurückgeführt und von dort den Eingangsleitungen der Adsorber-Filterpatronen wieder zugeführt wird.

10. Verfahren nach einem der vorhergehenden Ansprüche,
**dadurch gekennzeichnet, daß**
die Zeitdauer des zeitweise partiellen Adsorberzustand-Zyklusabschnittes der Zeitdauer eines Regenerationsprozeß-Zyklusabschnittes entspricht.

11. Vorrichtung (1) zur Reinigung von mit insbesondere chemischen Rückständen behafteten Gasen, zur Durchführung des Verfahrens nach Anspruch 1 mit
- einer Mehrzahl von Adsorber-Filterpatronen (4) zur Reinigung des Gases,
- einem Leitungssystem (3), das die Gase aus die Verunreinigung hervorrufenden Bereichen mit den Adsorber-Filterpatronen (4) verbindet und die gereinigten Gase zu den genannten Bereichen zurückführt,
- Gebläsen (5) zum Aufbau einer Gasströmung in den Leitungen sowie
- Regenerationseinrichtungen (6) zum Betrieb der Adsorber-Filterpatronen (4) in einem Regenerationszyklus,
**dadurch gekennzeichnet, daß**
zusätzlich zu der mindestens eine im Adsorberbetrieb laufenden Adsorber-Filterpatrone (4; II, III, IV) und mindestens einer im Regenerationsprozeß laufenden Adsorber-Filterpatrone (4; I) mindestens eine weitere Adsorber-Filterpatrone (4, V) an das Leitungssystem (3) angeschlossen ist, deren Gasdurchsatz über kontinuierlich verstellbare Drosselklappen (9) und eine Prozeßsteueranlage (13) umfanssende Steuermittel regelbar ist und daß das Gas, das die mindestens eine weitere Adsorber-Filterpatrone (4; V) durchströmt hat, einer Rückführsammelleitung des Leitungssystems (3) zuführbar ist, das bei Betrieb der Vorrichtung geschlossen ist.

12. Vorrichtung nach Anspruch 11,
**dadurch gekennzeichnet, daß**
insgesamt fünf Adsorber-Filterpatronen (4; I-V) vorgesehen sind und jeweils drei Adsorber-Filterpatronen im Adsorberbetrieb laufen sowie eine im Regenerationsbetrieb und eine im partiellen Adsorberbetrieb arbeitet.

13. Vorrichtung nach einem der Ansprüche 11 oder 12,
**dadurch gekennzeichnet, daß**
auf der Ausgangsseite einer jeden Adsorber-Filterpatrone (4) Meßelemente (20) zur Bestimmung der Gasfeuchte und/oder Gastemperatur und/oder des Schadstoffanteils im Gas angeordnet sind.

14. Vorrichtung nach einem der Ansprüche 11 - 13,
**dadurch gekennzeichnet, daß**
der Ausgang der Meßelemente (20) an einem Steuereingang (21) der Prozeßsteueranlage (13) angeschlossen ist.

15. Vorrichtung nach einem der Ansprüche 11 - 14,
**dadurch gekennzeichnet, daß**
im Bereich der Adsorber-Filterpatronenausgänge ein Abluftkamin (20) angeordnet ist, der über eine Verschließeinrichtung absperrbar ist.

## Claims

1. Process for the purification of gases loaded with residues, especially chemical residues, in particular for purifying exhaust air from printing plants,
- in which process a gas to be purified is drawn off from regions producing impurities and
- led via pipes to an arrangement of adsorber-filter cartridges
- serving for separation of the impurities from the gas,
- the cartridges being periodically separated in a cyclical manner from the exhaust-air stream for the carrying out of a regeneration process, and
- whose adsorber material is impinged upon by an expelling medium that is suitable for the purification of the adsorber material,
- wherein, besides at least one adsorber-filter cartridge provided for the continuous carrying out of the purification process and running in an adsorber operation, at least one adsorber-filter cartridge is provided that is in the regeneration state in cyclical exchange with in each case one of the other adsorber-filter cartridges,
**characterized in that**
the adsorber-filter cartridges are operated, between the regeneration cycle and the adsorption cycle, in a temporarily partial adsorber state in which they, after conclusion of their regeneration cycle, are each brought on stream, in addition to the adsorber-filter cartridges operating in the adsorber mode, by increasing the gas-throughput rate under closed loop control.

2. Process according to Claim 1, **characterized in that** the raising of the gas-throughput rate of the adsorber-filter cartridge running for a time in the partial-adsorber state proceeds in a continuously increasing manner.

3. Process according to Claim 1, **characterized in that** the raising of the gas-throughput rate of the adsorber-filter cartridge running for a time in the partial-adsorber state occurs according to an e-function.

4. Process according to Claim 1, **characterized in that** the raising of the gas-throughput rate of the adsorber-filter cartridge running for a time in the partial-adsorber state is controlled dependent upon the temperature of the gas at the output of the cartridge.

5. Process according to any of the preceding claims, **characterized by** its use for the purification of solvent-loaded exhaust air from printing plants.

6. Process according to any of the preceding claims, **characterized in that** steam is used as expelling medium in the regeneration process.

7. Process according to Claim 6, **characterized in that** the raising of the gas-throughput rate of the adsorber-filter cartridge running in the partial-adsorber state is regulated dependent upon the moisture content of the gas at the output of the cartridge.

8. Process according to any of the preceding claims, **characterized by** the use of activated carbon as adsorber material.

9. Process according to any of the preceding claims, **characterized in that** the air flowing out of the adsorber-filter cartridge arrangement is led back to the regions producing the impurities in the air-circulation process, and from there is again led to the input pipes of the adsorber-filter cartridges.

10. Process according to any of the preceding claims, **characterized in that** the duration of the temporary partial-adsorber state cycle segment corresponds to the duration of a regeneration-process cycle segment.

11. Device (1) for purification of gases loaded with residues, especially chemical residues, for carrying out the process according to Claim 1, comprising:
- a multiplicity of adsorber-filter cartridges (4) for purification of the gas,
- a piping system (3) that connects the gases from regions producing the impurities to the adsorber-filter cartridges (4) and returns the purified gases to said regions,
- blowers (5) for building up a gas flow in the piping system, and
- regeneration equipment (6) for operation of the adsorber-filter cartridges (4) in a regeneration cycle,
**characterized in that**, in addition to the at least one adsorber-filter cartridge (4; II, III, IV) running in the adsorber operation and at least one adsorber-filter cartridge (4; I) running in the regeneration process, at least one additional adsorber-filter cartridge (4; V) is connected to the piping system (3), whose gas throughput is closed-loop controllable via continuously adjustable throttle valves (9) and control means comprising a process control system (13), and **in that** the gas which has flown through the at least one further adsorber-filter cartridge (4; V) is feedable to a return collection line of the piping system (3) which is closed when the device is in operation.

12. Device according to Claim 11, **characterized in that** altogether five adsorber-filter cartridges (4; I-V) are provided and at any one time three adsorber-filter cartridges work in the adsorber operation, one in the regeneration operation, and one in the partial-adsorber operation.

13. Device according to either of Claims 11 and 12, **characterized in that** measuring elements (20) are arranged at the outlet side of each adsorber-filter cartridge (4) for determination of the gas moisture and/or gas temperature and/or pollutant proportion in the gas.

14. Device according to any of Claims 11-13, **characterized in that** the output of the measuring elements (20) is connected to a control input (21) of the process-control unit (13).

15. Device according to any of Claims 11-14, **characterized in that** an exhaust flue (20) is arranged in the region of the adsorber-filter cartridge outlets, which flue can be closed off via a closing arrangement.

## Revendications

1. Procédé d'épuration de gaz contaminés principalement par des résidus chimiques, en particulier pour épurer l'air sortant d'installations d'imprimerie,
dans lequel le gaz à épurer est soutiré des zones produisant les matières polluantes
et amené par le biais de tuyauteries à un ensemble de cartouches filtrantes à matériau adsorbant
qui servent à séparer les matières polluantes du gaz,
qui, revenant de manière cyclique, sont séparées du flux d'air d'échappement pour l'exécution d'un processus de régénération et
dont le matériau adsorbant contient un agent expulsant propre à épurer ou à régénérer le matériau adsorbant,
dans lequel, outre une cartouche filtrante à matériau adsorbant fonctionnant en mode adsorption, au moins une cartouche filtrante à matériau adsorbant alterne respectivement de manière cyclique avec l'une des autres cartouches filtrantes à matériau adsorbant en mode régénération pour exécuter en continu le processus d'épuration,
**caractérisé en ce que**
les cartouches filtrantes à matériau adsorbant sont mises en oeuvre temporairement en mode d'adsorption partielle entre le cycle de régénération et le cycle d'adsorption, mode dans lequel elles sont respectivement adjointes, au terme de leur cycle de régénération, aux cartouches filtrantes à matériau adsorbant fonctionnant en mode adsorption, avec une quantité de passage de gaz ou débit augmentant de manière régulée.

2. Procédé selon la revendication 1,
**caractérisé en ce que**
l'augmentation de la quantité de passage de gaz dans les cartouches filtrantes à matériau adsorbant fonctionnant temporairement en mode d'adsorption partielle est continue.

3. Procédé selon la revendication 1,
**caractérisé en ce que**
l'augmentation de la quantité de passage de gaz dans les cartouches filtrantes à matériau adsorbant fonctionnant temporairement en mode d'adsorption partielle s'effectue selon une fonction e.

4. Procédé selon la revendication 1,
**caractérisé en ce que**
l'augmentation de la vitesse de passage du gaz dans la cartouche filtrante à matériau adsorbant fonctionnant temporairement en mode d'adsorption partielle est commandée en fonction de la température du gaz à la sortie de la cartouche.

5. Procédé selon l'une des revendications précédentes,
**caractérisé par**
son utilisation pour épurer l'air chargé de solvants sortant d'installations d'imprimerie.

6. Procédé selon l'une des revendications précédentes,
**caractérisé en ce que**
de la vapeur d'eau est employée en tant qu'agent expulsant lors du processus de régénération.

7. Procédé selon la revendication 6,
**caractérisé en ce que**
l'augmentation de la quantité de passage de gaz à travers la cartouche filtrante à matériau adsorbant fonctionnant en mode d'adsorption partielle est régulée en fonction de la teneur en humidité du gaz à la sortie de la cartouche.

8. Procédé selon l'une des revendications précédentes,
**caractérisé par**
l'emploi de charbon actif en tant que matériau adsorbant.

9. Procédé selon l'une des revendications précédentes,
**caractérisé en ce que**
l'air sortant de l'ensemble de cartouches filtrantes à matériau adsorbant est ramené par un procédé de circulation dans les zones produisant des matières polluantes et amené, depuis ces zones, aux conduites d'entrée des cartouches filtrantes à matériau adsorbant.

10. Procédé selon l'une des revendications précédentes,
**caractérisé en ce que**
la durée de la partie de cycle associée à l'état d'adsorption partielle temporaire correspond à la durée d'une partie du cycle du processus de régénération.

11. Dispositif (1) pour épurer des gaz contaminés principalement par des résidus chimiques et pour exécuter le procédé selon la revendication 1, comprenant
un grand nombre de cartouches filtrantes à matériau adsorbant (4) pour épurer le gaz,
un système de conduites (3) pour amener les gaz provenant des zones produisant des matières polluantes aux cartouches filtrantes à matériau adsorbant (4) et ramener les gaz épurés dans les zones mentionnées,
des ventilateurs (5) pour générer un courant de gaz dans les conduites et
des équipements de régénération (6) pour faire fonctionner les cartouches filtrantes à matériau adsorbant au cours d'un cycle de régénération,
**caractérisé en ce que**,
en plus d'au moins la cartouche filtrante à matériau adsorbant fonctionnant en mode adsorption (4 ; II, III, IV) et d'au moins une cartouche filtrante à matériau adsorbant (4 ; I) fonctionnant en mode régénération, au moins une autre cartouche filtrante à matériau adsorbant (4, V) est raccordée au système de conduites (3), la quantité de passage de gaz à l'intérieur de la cartouche pouvant être régulée par le biais de moyens de commande comprenant des clapets d'étranglement (9) réglables en continu et une installation de commande des processus (13), et **en ce que** le gaz, qui a traversé au moins l'autre cartouche filtrante à matériau adsorbant (4 ; V), peut être amené à une conduite collective de retour du système de conduites (3), qui est fermée lorsque le dispositif fonctionne.

12. Dispositif selon la revendication 11,
**caractérisé en ce qu'**
il est prévu au total cinq cartouches filtrantes à matériau adsorbant (4 ; I-V), trois cartouches filtrantes à matériau adsorbant fonctionnant respectivement en mode adsorption, une cartouche fonctionnant en mode régénération et une cartouche fonctionnant en mode d'adsorption partielle.

13. Dispositif selon l'une quelconque des revendications 11 ou 12,
**caractérisé en ce que** des éléments de mesure (20) sont disposés à la sortie de chaque cartouche filtrante à matériau adsorbant (4) pour déterminer l'humidité du gaz et/ou la température du gaz et/ou la part de matières polluantes dans le gaz.

14. Dispositif selon l'une des revendications 11 à 13, **caractérisé en ce que**
la sortie des éléments de mesure (20) est raccordée à une entrée de commande (21) de l'installation de commande des processus (13).

15. Dispositif selon l'une des revendications 11 à 14,
**caractérisé en ce qu'**
un conduit d'évacuation (20) est disposé dans la zone des sorties des cartouches filtrantes à matériau adsorbant, lequel peut être fermé par un dispositif d'obturation.
